# EUROPÄISCHE PATENTSCHRIFT

(11) **EP 1 174 321 B1**
(45) Veröffentlichungstag und Bekanntmachung des Hinweises auf die Patenterteilung: **14.05.2003**
(21) Anmeldenummer: 01115591.8
(22) Anmeldetag: 28.06.2001
(51) Int. Cl.: B60T 11/224

(54) **Zweistufiges Ventil**
Two-stage valve
Soupape à deux étages

(30) Priorität: 18.07.2000 DE 10034787
(43) Veröffentlichungstag der Anmeldung: 23.01.2002
(73) Patentinhaber: DEERE & COMPANY, Moline, Illinois 61265-8098 (US)
(72) Erfinder: Becker, Manfred, 67227 Frankenthal (DE)
(74) Vertreter: Lau-Loskill, Philipp, Dipl.-Phys.

(56) Entgegenhaltungen:
- US-A- 4 455 831
- US-A- 5 239 828

## Beschreibung

Die Erfindung betrifft ein zweistufiges Ventil, insbesondere ein Bremsventil, mit zwei Querschnittsstufen, deren Wirkungsquerschnitte bei einer Ventilbetätigung nacheinander wirksam werden, indem zunächst ein Druckraum größeren Wirkungsquerschnitts, die sogenannte Füllstufe, zum Befüllen einer Anlage verwendet wird und dann ein Druckraum kleineren Wirkungsquerschnitts, die sogenannte Druckstufe, zum Aufbringen des Arbeitsdrucks eingesetzt wird. Zwischen der Füllstufe und einem Vorratsbehälter ist ein Füllstufenentlastungsventil angeordnet, welches ein Ventilelement und einen auf das Ventilelement einwirkenden Entlastungskolben aufweist. Das Ventilelement ist einerseits dem Druck im Vorratsbehälter sowie einer Federkraft und andererseits dem Druck in der Füllstufe ausgesetzt. Es öffnet eine Verbindung zwischen der Füllstufe und dem Vorratsbehälter, wenn ein in der Füllstufe vorgebbarer Grenzdruck erreicht und überschritten wird. Der Entlastungskolben ist einenends dem Druck im Vorratsbehälter ausgesetzt und kann anderenends dem Druck in der Druckstufe ausgesetzt werden. Er liegt mit einem freien Ende an dem Ventilelement an, um mit steigendem Differenzdruck zwischen der Druckstufe und der Füllstufe das Ventilelement in Öffnungsrichtung zu drängen.

Ein derartiges als Bremsventil ausgebildetes Ventil geht aus der US-A-4,455,831 hervor, bei dem das Ventilelement als Kugel ausgebildet ist, welche mit einem Ventilsitz im Ventilgehäuse zusammenwirkt. Das Ventilelement öffnet, wenn der Fluiddruck innerhalb der Füllstufe einen bestimmten Stellwert erreicht. Der Entlastungskolben ist ein Stufenkolben dessen dickerer Kolbenabschnitt in einer Zylinderbohrung geführt ist und eine Ringnut aufweist, die eine Dichtung aufnimmt. Der dünnere Kolbenabschnitt greift mit seiner Stirnseite an der Kugel an. Bei steigendem Druck in der Druckstufe wird der Entlastungskolben mit zunehmender Kraft gegen die Kugel in Öffnungsrichtung gedrückt. Hierdurch soll ein konstanter Betrieb selbst bei plötzlicher Bremsbetätigung garantiert werden. Durch die Verwendung der Dichtung am Entlastungskolben kommt es jedoch zu reibungsbedingten Beeinträchtigungen wie Hysterese und "schwammiges" Ansprechverhalten.

In der EP-A-0 534 309 wird ein zweistufiges Bremsventil beschrieben, bei dem zwischen der Füllstufe und dem Vorratsbehälter ein Rückschlagventil angeordnet ist, welches eine Kugel enthält, die durch die Kraft einer Feder auf einen Ventilsitz gedrückt wird und bei einem vorgebbaren Grenzdruck öffnet. Um die erforderliche Betätigungskraft für das Bremsventil klein zu halten und eine sprunghafte Änderung des Arbeitsdrucks während des Übergangs zwischen Füllstufe und Druckstufe zu vermeiden, ist die Schließkraft der Feder in Abhängigkeit des Drucks in der Druckstufe steuerbar, in dem dieser Druck auf einen Steuerschieber wirkt, der seinerseits die Feder entlastet. Auch bei dieser Lösung sind Dichtungen vorgesehen, um Leckagen zu vermeiden, was die erwähnten Nachteile mit sich bringt.

Die der Erfindung zugrunde liegende Aufgabe wird darin gesehen, ein Ventil der eingangs genannten Art anzugeben, durch welches sich die eingangs genannten Nachteile vermeiden lassen. Insbesondere soll das Ventil ein direktes Ansprechverhalten und ein reduziertes Hysterese-Verhalten aufweisen.

Die Aufgabe wird erfindungsgemäß durch die Lehre eines der Patentansprüche 1 oder 7 gelöst. Weitere vorteilhafte Ausgestaltungen und Weiterbildungen der Erfindung gehen aus den Unteransprüchen hervor.

Bei dem erfindungsgemäßen Ventil sind sowohl das Ventilelement als auch der Entlastungskolben als Zylinderkörper ausgebildet. Jeder dieser Zylinderkörper ist in einer zugehörigen Zylinderbohrung des Ventilkörpers nach Art einer Gleitpassung geführt. Als Gleitpassung eignet sich eine Spielpassung, bei der der Zwischenraum zwischen dem Zylinderkolben und der zugehörigen Bohrung so gering ist, dass ein Flüssigkeitsdurchtritt weitgehend vermieden wird, sodass kein Dichtelement verwendet werden muss, und dennoch ein leichtes Verschieben des Zylinderkolbens möglich ist. Die Bohrungen werden vorzugsweise mit Reibahle feingerieben. Des weiteren werden vorzugsweise relativ lange Zylinderkörper verwendet. Dadurch bildet sich zwischen der Bohrung und dem Zylinderkörper ein langer Kanal mit einer großen Dichtlänge aus, die den Flüssigkeitsdurchtritt erschwert.

Durch den Wegfall der Dichtungselemente reagiert das Ventil in seinem Ansprechverhalten unmittelbar auf Betätigungskräfte. Das Hysterese-Verhalten wird erheblich reduziert und die Bremskraft ist besser dosierbar. Des weiteren weist das erfindungsgemäße Ventil mit seinem Füllstufenentlastungsventil einen sehr einfachen, kostengünstig herstellbaren, aus wenigen Bauteilen bestehenden Aufbau auf.

Eine besonders vorteilhafte Ausbildung der Erfindung ergibt sich dadurch, dass wenigstens einer der beiden Zylinderkörper eine Nadellagerrolle ist. Damit besteht der Zylinderkörper aus einem handelsüblichen hochpräzisen Bauteil, das als Massenprodukt im Handel preiswert erhältlich ist. Da Nadellagerrollen meist relativ lang sind, ergibt sich eine große Dichtlänge, die gemeinsam mit der Passgenauigkeit der feingeriebenen Bohrung eine Dichtwirkung hat, die ohne zusätzliches Dichtelement, insbesondere ohne Elastomerdichtung, auskommt.

Es ist von Vorteil, wenn die Mittellinien der Zylinderbohrungen, die das Ventilelement bzw. den Entlastungskolben aufnehmen, miteinander fluchten. Dabei sind die Zylinderbohrungen nach Art einer Stufenbohrung ausgebildet, die sich auf einfache Weise präzise herstellen lässt.

Vorzugsweise mündet in die dem Ventilelement zugeordnete Zylinderbohrung ein mit dem Vorratsbehälter verbundener Entlastungsskanal. An der dem Entlastungskolben zugewandten Seite des Ventilelements ist eine mit dem Entlastungsskanal zusammenwirkende Steuerkante ausgebildet, über die bei Erreichen des Grenzdruckes eine Verbindung zwischen der Füllstufe und dem Vorratsbehälter hergestellt wird.

Es hat sich als besonders vorteilhaft erwiesen, in dem Entlastungsskanal wenigstens eine Blende anzuordnen oder eine Blende im Entlastungsskanal auszubilden. Hierdurch wird besonders bei plötzlicher Ventilbetätigung, wenn sich das Füllstufenentlastungsventil rasch öffnet, das Ansprechverhalten in der Übergangsphase zwischen Füllstufe und Druckstufe verstetigt, sodass sprunghafte Ventilreaktionen vermieden werden können.

Es ist zweckmäßig, einen Anschlag vorzusehen, der den Öffnungshub des Ventilelements begrenzt und damit nach Beendigung einer Ventilbetätigung ein rasches Rückkehren des Ventilelements in seine Ausgangsstellung ermöglicht.

Erfingunsgemäße Ventile finden in vorteilhafter Weise bei Fahrzeugen, insbesondere bei landwirtschaftlichen oder industriellen Fahrzeugen wie Ackerschleppern, als Bremsventile Anwendung. Dabei ist eine rechte und eine linke Fahrzeugbremse vorgesehen, die je ein erfindungsgemäß ausgebildetes Ventil enthält. Über einen Bremsausgleichskanal stehen die jeweiligen Druckstufenseiten der beiden die Entlastungskolben aufnehmenden Zylinderbohrungen hydraulisch miteinander in Verbindung. Dies ermöglicht es, dass beide Bremskreise abhängig vom jeweiligen Bremspedalweg miteinander gekoppelt werden, um sicherzustellen, dass beide Bremskreise mit demselben Druck versorgt werden und ein "Schiefziehen" beim Bremsen vermieden wird.

Es ist von besonderem Vorteil, wenn die beiden Füllstufenentlastungsventile gegeneinander verstimmt sind und bei unterschiedlichen Drücken öffnen. Dies kann beispielsweise ausdrücklich durch Verwendung von Federn mit unterschiedlicher Federkonstante und/oder durch die Vorgabe unterschiedlicher Ruhelagen für die beiden Ventilelemente erfolgen. Hierdurch lässt sich der Umsteuervorgang zwischen Füllstufe und Druckstufe über einen größeren Druckbereich ausdehnen und verstetigen, so dass für die Bedienungsperson der Umschaltvorgang nicht mehr spürbar ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Schnittdarstellung eines erfindungsgemäßen zweistufigen Bremsventils entlang der in Fig. 4 dargestellten Schnittlinie 1-1,
- Fig. 2: die Schnittdarstellung des Bremsventils gemäß Fig. 1 entlang der in Fig. 4 dargestellten Schnittlinie 2-2,

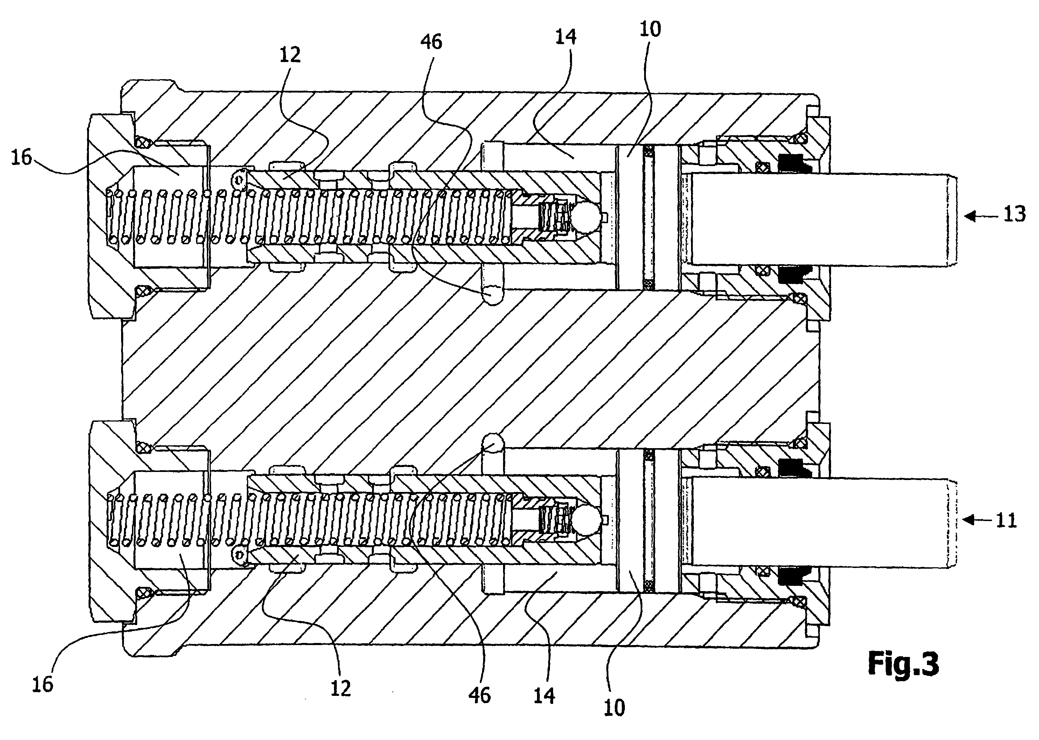

- Fig. 3: die Schnittdarstellung des Bremsventils gemäß Fig. 1 entlang der in Fig. 4 dargestellten Schnittlinie 3-3 und
- Fig. 4: die Teilschnittdarstellung des Bremsventils gemäß Fig. 1 entlang der in Fig. 1 dargestellten Schnittlinie 4-4.

Die Figuren zeigen ein durch Eigenkraft (manuell) betätigtes Bremsventil für einen Ackerschlepper, welches zwei Ventileinheiten 11, 13 enthält, die jeweils durch ein zugehöriges rechtes bzw. linkes Bremspedal betätigbar sind, um auf bekannte Weise eine Lenkbremsfunktion zu ermöglichen. Jede Ventileinheit 11, 13 enthält zwei Übersetzungsstufen, die die Kombination von geringem Pedalweg und niedrigen Kräften erlauben.

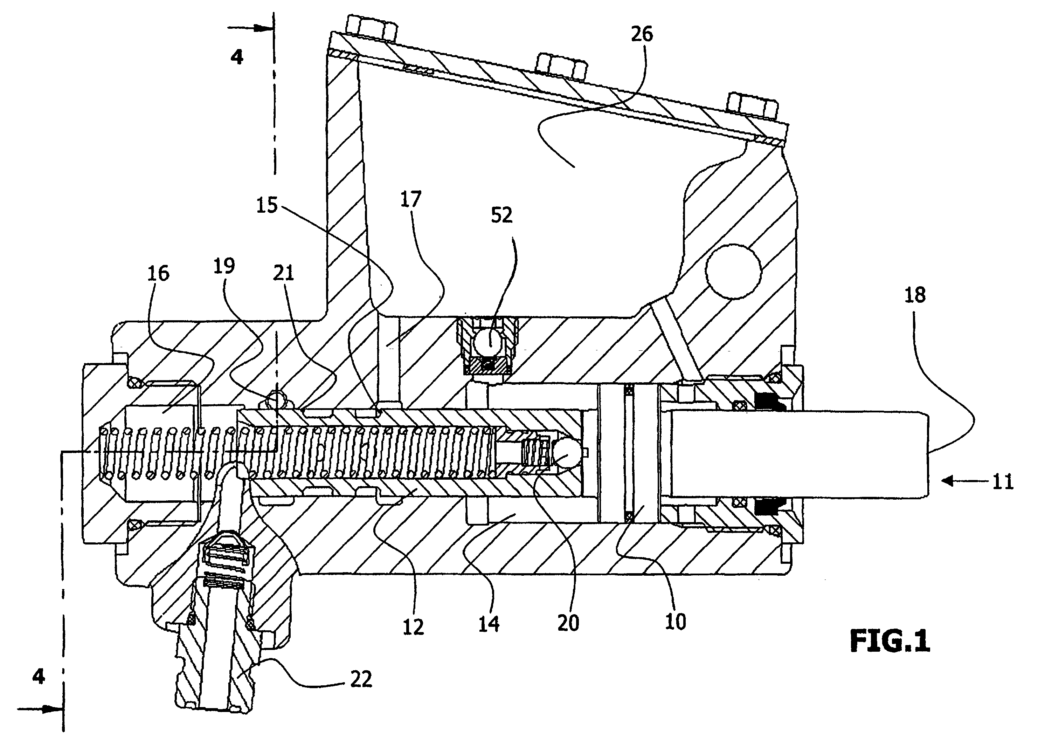

In Fig. 1 ist der Stufenhauptzylinder einer der beiden Ventileinheiten 11, 13 dargestellt, welcher zwei Kolben unterschiedlichen Durchmessers aufnimmt. Hierbei handelt es sich um einen Füllkolben 10 großen Durchmessers und einen Druckkolben 12 kleineren Durchmessers. Die den beiden Kolben 10, 12 zugeordneten Druckräume werden mit Füllstufe 14 und Druckstufe 16 bezeichnet.

Durch Betätigung des nicht dargestellten Bremspedals wird eine Kraft auf das Kolbenende 18 ausgeübt und der Füllkolben 10 gemeinsam mit dem Druckkolben 12 nach links verschoben. Dabei wird durch eine erste Steuerkante 15 des Druckkolbens 12 ein Kanal 17, der die Druckstufe 16 mit einem Vorratsbehälter 26 verbindet, verschlossen. Bei weiterer Kolbenbewegung wird durch eine zweite Steuerkante 21 des Druckkolbens 12 ein Bremsausgleichskanal 19 mit der Druckstufe 16 verbunden. Der Bremsausgleichskanal 19 verbindet die Stufenhauptzylinder der beiden Ventileinheiten 11, 13 miteinander.

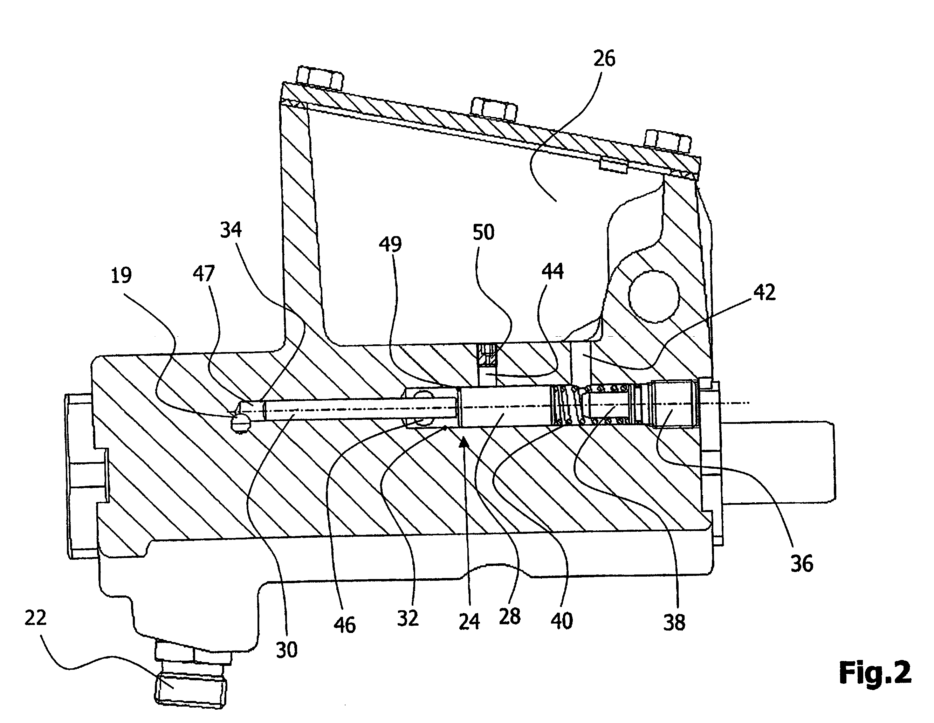

Mit der Kolbenbewegung nach links baut sich in der Füllstufe 14 ein Druck auf, durch den ein Rückschlagventil 20 geöffnet wird, so dass Bremsflüssigkeit von der Füllstufe 14 durch das Rückschlagventil 20, die Druckstufe 16 und einen Fitting 22 zur nicht dargestellten Bremse fließt und eine Bremsscheibe zur Anlage bringt. Wenn die Bremsscheibe anliegt, kann keine nennenswerte Flüssigkeitsmenge mehr abfließen, so dass der Druck in der Füllstufe 14 und in der Druckstufe 16 bis zu einem Grenzdruck weiter ansteigt. Beim Erreichen des Grenzdrucks öffnet ein in Fig. 2 dargestelltes Füllstufenentlastungsventil 24 und verbindet die Füllstufe 14 mit einem Vorratsbehälter 26. Etwa zur gleichen Zeit schließt das Rückschlagventil 20 und der Druck in der Druckstufe 16 steigt mit zunehmender Bremspedalkraft weiter an, so dass der erwünschte Bremseffekt eintritt.

Das in Fig. 2 dargestellte Füllstufenentlastungsventil 24 enthält als Ventilelement 28 einen Zylinderkörper großen Durchmessers und einen als Entlastungsdruckkolben 30 ausgebildeten Zylinderkörper kleineren Durchmessers. Das Ventilelement 28 ist in einer größeren Zylinderbohrung 32 und der Entlastungsdruckkolben 30 ist in einer Zylinderbohrung 34 kleineren Durchmessers längs verschiebbar. Bei den Zylinderkörpern 28, 30 handelt es sich um handelsübliche Nadellagerrollen, die hohe Fertigungstoleranzen einhalten. Die Zylinderbohrungen 32, 34 fluchten miteinander und bilden eine Stufenbohrung. Sie weisen hinsichtlich ihrer axialen Ausrichtung eine hohe Fertigungspräzision auf und sind feingerieben. Sie bilden mit den zugehörigen Zylinderkörpern 28, 30 Gleitdichtungen hoher Genauigkeit, die einen Flüssigkeitsdurchtritt weitestgehend verhindern.

Die Stufenbohrung 32, 34 ist durch einen Stopfen 36 verschlossen. Der Stopfen 36 trägt einen in die Zylinderbohrung 32 ragenden Ansatz 38, der die axiale Bewegung des Ventilelements 28 begrenzt. Konzentrisch zum Ansatz 38 ist eine schraubenförmige Druckfeder 40 angeordnet, die zwischen dem Stopfen 36 und dem Ventilelement 28 eingespannt ist und das Ventilelement 28 nach links, von dem Stopfen 36 wegdrückt.

Die größere Zylinderbohrung 32 ist über einen Sumpfkanal 42 und einen Entlastungskanal 44 mit dem Vorratsbehälter 26 und über einen nur teilweise erkennbaren Füllstufenkanal 46 mit der Füllstufe 14 verbunden. Der Sumpfkanal 42 mündet in die größere Zylinderbohrung 32 im Bereich des Stopfenansatzes 38. Der Sumpfkanal 42 ist nicht durch das Ventilelement 28 verschließbar, so dass der Flüssigkeitsdruck im Vorratsbehälter ständig an der rechten Stirnseite des Ventilelements 28 ansteht. Der Füllstufenkanal 46 mündet in die größere Zylinderbohrung 32 in einem Bereich links neben dem Ventilelement 28, so dass der Flüssigkeitsdruck in der Füllstufe 14 ständig auf der linken Stirnseite des Ventilelements 28 lastet. Der Entlastungskanal 44 wird hingegen durch das Ventilelement 28 verschlossen, wenn dieses sich in der in Fig. 2 dargestellten Ruhestellung befindet. Wird jedoch der Druck in der Füllstufe 14 so groß, dass er den Druck des Vorratsbehälters 26 und die Kraft der Druckfeder 40 überwindet, verschiebt sich das Ventilelement 28 nach rechts und öffnet den Entlastungskanal 44. Der Öffnungsgrenzdruck hängt von dem Druck des Vorratsbehälters 26 und der Kraft der Druckfeder 40 ab.

Das linke Ende 47 der kleineren Zylinderbohrung 34 steht mit dem Bremsausgleichskanal 19 in Verbindung. Wenn der Bremskolben 10, 12 betätigt ist und die zweite Steuerkante 21 den Bremsausgleichskanal 19 mit der Druckstufe 16 verbindet, steht an der linken Stirnfläche des Entlastungsdruckkolbens 30 der Druck der Druckstufe 16 an. Auf der rechten Stirnseite des Entlastungsdruckkolbens 30 lastet hingegen der Druck der Füllstufe 14. Wenn der Druck der Druckstufen 16 größer ist als der Druck der Füllstufe 14 wird der Entlastungsdruckkolben 30 gegen das Ventilelement 28 gedrückt. Mit steigender Druckdifferenz wird die Gegenkraft der Druckfeder 40 zunehmend kompensiert, so dass der für das Ventilelement 28 erforderliche Öffnungsdruck abnimmt und der Druck der Füllstufe 14 über die Steuerkante 49 des Ventilelements 28 und den Entlastungskanal 44 sukzessive abgebaut wird.

Während eines Bremsvorgangs, bei dem das Bremspedal mit zunehmender Kraft betätigt wird und die Kolben 10, 12 nach links verschoben werden, wird automatisch von der Füllstufe auf die Druckstufe umgeschaltet, indem bei einem vorgegebenen Druck das Rückschlagventil 20 schließt. Bei der Umschaltung geht der Verlauf der Bremskraftkennlinie, die die Abhängigkeit des Bremsdrucks von der Bremspedalkraft wiedergibt, von einer Füllkennlinie auf eine Druckkennlinie über.

Die beschriebene Entlastung des Ventilelements 28 hat zur Folge, dass beim Übergang des Bremsdruckaufbaus durch die Füllstufe 14 zum Bremsdruckaufbau durch die Druckstufe 16 kein schroffer Knick in der Bremskraftkennlinie auftritt, der zu einem für die Bedienungsperson unerwarteten Anstieg der Bremswirkung führen kann.

Bei rascher Bremsbetätigung erfolgt ein schneller Übergang von der Füllstufe zur Druckstufe. Damit steigt die auf dem Entlastungsdruckkolben 30 lastende Druckdifferenz schnell an und verschiebt das Ventilelement 28, so dass der Druck in der Füllstufe 14 über den Füllstufenkanal 46 und den Entlastungskanal 44 schnell abgebaut wird, was zu einer weiteren Beschleunigung des Druckdifferenzanstiegs führt. Die durch das Bremspedal aufgebrachte Bremskraft wirkt damit sehr bald fast ausschließlich auf die Druckstufe 16 und wird nicht durch ein "Druckpolster" in der Füllstufe gedämpft. Dies kann zu einem unerwartet schnellen Anstieg der Bremsleistung führen. Um den Flüssigkeitsabfluss aus der Füllstufe 14 zu verlangsamen und damit beim Übergang von der Füllstufe zu der Druckstufe eine übermäßige Änderung im Verlauf der Bremskraftkennlinie zu vermeiden, ist in dem Entlastungskanal 44 eine Blende 50 angeordnet, die den Flüssigkeitsabfluss aus der größeren Zylinderbohrung 32 begrenzt. Der Effekt der Blende 50 nimmt mit zunehmender Bremsbetätigungskraft zu.

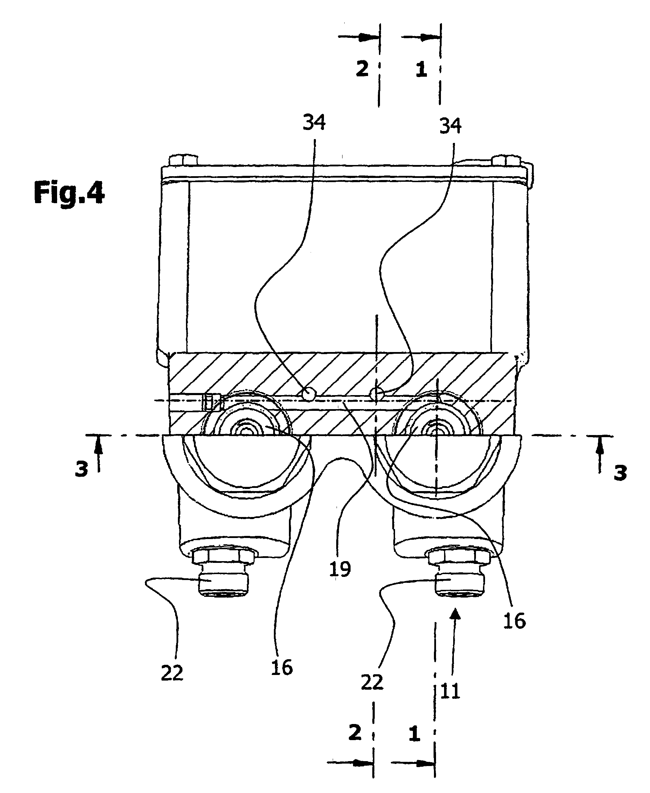

Wie aus Fig. 4 hervorgeht, stehen die Stufenhauptzylinder der beiden Ventileinheiten 11, 13 durch den Bremsausgleichskanal 19 miteinander in Verbindung. Bei Betätigung beider Bremspedale werden die Druckkolben 12 beider Ventileinheiten 11, 13 verschoben. Dabei geben die zweiten Steuerkanten 21 der Druckkolben 16 jeweils eine Öffnung zwischen ihrer Druckstufe 16 und dem Bremsausgleichskanal 19 frei, so dass beide Druckstufen 16 miteinander verbunden werden. Alle Bremsen sind damit dem selben Bremsdruck ausgesetzt, wodurch ein "Schiefziehen" beim Bremsen vermieden wird. Der Bremsdruck wird über den Bremsausgleichskanal 19 den beiden Entlastungsdruckkolben 30 mitgeteilt, so dass an beiden Ventilelementen 28 der gleiche Entlastungsdruck ansteht. Die beiden Druckfedern 40 der beiden Ventileinheiten 11, 13 können etwas unterschiedliche Federkonstanten aufweisen, so dass die Ventilelemente 28 unterschiedlich reagieren und nicht gleichzeitig sondern zeitlich versetzt öffnen. Dies führt zu einer weiteren Verstetigung der Bremskraftkennlinie, so dass der Übergang von der Füllstufe zur Druckstufe für die Bedienungsperson nicht mehr spürbar ist. Zu dem gleichen Zweck können auch die Stopfen 36 und/oder die Druckfedern 40 der beiden Ventileinheiten 11, 13 unterschiedliche Längen aufweisen, so dass die axiale Ruhelage, d. h. die Lage im drucklosen Zustand, der beiden Ventilelemente 28 unterschiedlich ist.

Die Füllstufe 14 steht mit dem Vorratsbehälter 26 über ein Nachsaugventil 52 in Verbindung, über welches beim Lösen des Bremspedals Bremsflüssigkeit aus dem Vorratsbehälter 26 in die Füllstufe 14 gesaugt wird, so daß der Kolben 10 in seine Ausgangsposition zurückkehren kann.

## Patentansprüche

1. Zweistufiges Ventil, insbesondere Bremsventil, mit zwei Querschnittsstufen, deren Wirkungsquerschnitte bei einer Ventilbetätigung nacheinander wirksam werden, indem zunächst ein Druckraum größeren Wirkungsquerschnitts (Füllstufe 14) zum Befüllen einer Anlage verwendet wird und dann ein Druckraum kleinere Wirkungsquerschnitts (Druckstufe 16) zum Aufbringen des Arbeitsdrucks eingesetzt wird, wobei ein zwischen der Füllstufe (14) und einem Vorratsbehälter (26) angeordnetes Füllstufenentlastungsventil (24) vorgesehen ist mit einem Ventilelement (28), welches einerseits dem Druck im Vorratsbehälter (26) sowie einer Federkraft und andererseits dem Druck in der Füllstufe (14) ausgesetzt ist, so dass es bei einem vorgebbaren in der Füllstufe (14) herrschenden Grenzdruck öffnet, und mit einem Entlastungskolben (30), welcher einerseits dem Druck in der Füllstufe (14) und andererseits dem Druck in der Druckstufe (16) aussetzbar ist und welcher mit einem freien Ende an dem Ventilelement (28) anliegt, um mit steigendem Differenzdruck zwischen der Druckstufe (16) und der Füllstufe (14) das Ventilelement (28) in Öffnungsrichtung zu drängen, **dadurch gekennzeichnet, dass** als Ventilelement (28) und als Entlastungskolben (30) jeweils ein Zylinderkörper verwendet wird, der ohne Verwendung eines Dichtelements in einer zugehörigen Zylinderbohrung (32, 34) im Ventilgehäuse nach Art einer Gleitpassung geführt ist.

2. Ventil nach Anspruch 1, **dadurch gekennzeichnet, dass** wenigstens ein Zylinderkörper (28, 30) eine Nadellagerrolle ist.

3. Ventil nach Anspruch 1 oder 2, **dadurch gekennzeichnet, dass** die Mittellinien der Zylinderbohrungen (32, 34), die das Ventilelement (28) bzw. den Entlastungskolben (30) aufnehmen, miteinander fluchten und dass die Zylinderbohrungen (32, 34) nach Art einer Stufenbohrung ausgebildet sind.

4. Ventil nach einem der Ansprüche 1 bis 3, **dadurch gekennzeichnet, dass** in die dem Ventilelement (28) zugeordnete Zylinderbohrung (32) ein mit dem Vorratsbehälter (26) verbundener Entlastungsskanal (44) mündet und dass an der dem Entlastungskolben (30) zugewandten Seite des Ventilelements (28) eine mit dem Entlastungsskanal (44) zusammenwirkende Steuerkante (49) ausgebildet ist, über die bei Erreichen des Grenzdruckes eine Verbindung zwischen der Füllstufe (14) und dem Vorratsbehälter (26) hergestellt wird.

5. Ventil nach einem der Ansprüche 1 bis 4, **dadurch gekennzeichnet, dass** in dem Entlastungsskanal (44) wenigstens eine Blende (50) angeordnet oder ausgebildet ist.

6. Ventil nach einem der Ansprüche 1 bis 5, **dadurch gekennzeichnet, dass** ein Anschlag (38) vorgesehen ist, der den Öffnungshub des Ventilelements (28) begrenzt.

7. Bremsventil für eine rechte und eine linke Fahrzeugbremse mit zwei Ventilen nach einem der Ansprüche 1 bis 6, **dadurch gekennzeichnet, dass** die beiden die Entlastungsdruckkolben (30) aufnehmenden Zylinderbohrungen (34) im Bereich ihrer Druckstufenseite durch einen Bremsausgleichskanal (19) hydraulisch miteinander in Verbindung stehen.

8. Bremsventil nach Anspruch 7, **dadurch gekennzeichnet, dass** die beiden Füllstufenentlastungsventile (24) gegeneinander verstimmt sind und bei unterschiedlichen Drücken öffnen.

9. Bremsventil nach Anspruch 8, **dadurch gekennzeichnet, dass** die auf die beiden Ventilelemente (28) einwirkenden Federn (40) unterschiedlich ausgelegt sind und beispielsweise unterschiedliche Federkonstanten aufweisen.

10. Bremsventil nach Anspruch 8 oder 9, **dadurch gekennzeichnet, dass** die axialen Ruhelagen der beiden Ventilelemente (28) unterschiedlich sind.

## Claims

1. A two-stage valve, especially a brake valve, with two cross-section stages whose working cross-sections become operative one after the other on valve actuation, in that a pressure chamber of greater working cross-section (filling stage 14) is initially used for filling a system and than a pressure chamber of smaller working cross-section (pressure stage 16) is used to apply the working pressure, wherein a filling stage relief valve (24) located between the filling stage (14) and a reservoir (26) is provided, with a valve element (28) which is subjected on one side to the pressure in the reservoir (26) and a spring force and on the other side to the pressure in the filling stage (14), so that it opens at a predeterminable limit pressure obtaining in the filling stage (14), and with a relief piston (30) which can be subjected to the pressure in the filling stage (14) on one side and to the pressure in the pressure stage (16) on the other side, and of which a free end bears on the valve element (28), in order to bias the valve element (28) in the opening direction with increasing differential pressure between the pressure stage (16) and the filling stage (14), **characterized in that** a cylinder body is used in each case as the valve element (28) and as the relief piston (30) and is guided in the manner of a sliding fit in an associated cylinder bore (32, 34) in the valve housing, without use of a sealing element

2. A valve according to claim 1, **characterized in that** at least one cylinder body (28, 30) is a needle bearing roller.

3. A valve according to claim 1 or 2, **characterized in that** the centre lines of the cylinder bores (32, 34) which receive the valve element (28) and the relief piston (30) respectively coincide with one another and **in that** the cylinder bores (32, 34) are in the form of a stepped bore.

4. A valve according to any of claims 1 to 3, **characterized in that** a relief channel (44) connected to the reservoir (26) opens into the cylinder bore (32) associated with the valve element (28) and **in that** a control edge (49) cooperating with the relief channel (44) is formed on the side of the valve element (28) facing the relief piston (30), through which a connection between the filling stage (14) and the reservoir (26) is produced on attaining the limit pressure.

5. A valve according to any of claims I to 4, **characterized in that** at least one orifice (50) is disposed or formed in the relief channel (44).

6. A valve according to any of claims 1 to 6, **characterized in that** a stop (38) is provided, which limits the opening stroke of the valve element (28).

7. A brake valve for a right and a left vehicle brake, with two valves according to any of claims 1 to 6, **characterized in that** the two cylinder bores (34) receiving the relief pressure pistons (30) are in hydraulic communication with one another through a brake equalising channel (19) in the regions of their pressure stage sides.

8. A brake valve according to claim 7, **characterized in that** the two filling stage relief valves (24) are unbalanced with each other and open at different pressures.

9. A valve according to claim 8, **characterized in that** the springs (40) acting on the two valve elements (28) are designed differently and for example have different spring constants.

10. A valve according to claim 8 or 9, **characterized in that** the axial positions of rest of the two valve elements (28) are different

## Revendications

1. Soupape à deux étages, notamment soupape de frein, comportant deux étages de section transversale, dont les sections transversales d'action deviennent actives successivement lors d'un actionnement de la soupape, par le fait que tout d'abord une chambre de pression de la section transversale d'action la plus grande (étage de remplissage) 14 est utilisée pour le remplissage d'une installation et ensuite une chambre de pression ayant une section transversale d'action plus petite (étage de pression 16) est utilisée pour appliquer la pression de travail, et dans laquelle il est prévu une soupape de détente (24) de l'étage de remplissage, qui est disposée entre l'étage de remplissage (14) et un réservoir (26) et qui comporte un élément de soupape (28), qui est soumis d'une part à la pression dans le réservoir (26) ainsi qu'à une force de ressort et d'autre part à la pression dans l'étage de remplissage (14), de sorte que l'élément de soupape s'ouvre dans le cas d'une pression limite pouvant être prédéterminée, qui règne dans l'étage de remplissage (14), et comportant un piston de détente (30), qui peut être soumis à une pression dans l'étage de remplissage (14) et d'autre part la pression dans l'étage de pression (16) et qui s'applique par une extrémité libre contre l'élément de soupape (28) de manière à repousser l'élément de soupape (28) dans la direction d'ouverture, au moyen d'une pression différentielle croissante entre l'étage de pression (16) et l'étage de remplissage (14), **caractérisée en ce qu'**on utilise comme élément de soupape (28) et comme piston de détente (30) respectivement un corps cylindrique qui est guidé, sans l'utilisation d'un élément d'étanchéité, dans un alésage cylindrique associé (32,34) situé dans le boîtier de soupape, et ce à la manière d'un ajustement coulissant.

2. Soupape selon la revendication 1, **caractérisée en ce qu'**au moins un corps cylindrique (28,30) est un rouleau de roulement à aiguilles.

3. Soupape selon la revendication 1 ou 2, **caractérisée en ce que** les axes centraux des perçages cylindriques (32,34), qui logent l'élément de soupape (28) et le piston de détente (30), sont alignés entre eux et que les perçages cylindriques (32,34) sont agencés sous la forme d'un perçage étagé.

4. Soupape selon l'une des revendications 1 à 3, **caractérisée en ce qu'**un canal de détente (44) relié au réservoir (26) débouche dans le perçage cylindrique (32) associé à l'élément de soupape (28), et que sur le côté de l'élément de soupape (28), tourné vers le piston de détente (30), est formée une arête de commande (49), qui coopère avec le canal de détente (44) et au moyen de laquelle, lorsque la pression limite est atteinte, une liaison est établie entre l'étage de remplissage (14) et le réservoir (26).

5. Soupape selon l'une des revendications 1 à 4, **caractérisée en ce qu'**au moins un diaphragme (50) est disposé ou formé dans le canal de détente (44).

6. Soupape selon l'une des revendications 1 à 5, **caractérisée en ce qu'**il est prévu une butée (38) qui limite la course d'ouverture de l'élément de soupape (28).

7. Soupape de frein pour un frein de droite et un frein de gauche d'un véhicule comportant deux soupapes selon l'une des revendications 1 à 6, **caractérisée en ce que** les deux perçages cylindriques (34), qui logent les pistons de détente (30), sont reliés entre eux par voie hydraulique, dans la zone de leur côté d'étage de pression, par un canal d'équilibrage de freinage (19).

8. Soupape selon la revendication 7, **caractérisée en ce que** les deux soupapes de détente (24) de l'étage de remplissage sont désaccordées l'une par rapport à l'autre et s'ouvrent pour des pressions différentes.

9. Soupape selon la revendication 8, **caractérisée en ce que** les ressorts (40), qui agissent sur les deux éléments de soupape (28), sont agencés différemment et possèdent par exemple des constantes d'élasticité différentes.

10. Soupape selon la revendication 8 ou 9, **caractérisée en ce que** les positions axiales de repos des deux éléments de soupape (28) sont différentes.
